# FASCICULE DE BREVET EUROPEEN

(11) **EP 0 481 841 B1**
(45) Date de publication et mention de la délivrance du brevet: **27.04.1994**
(21) Numéro de dépôt: 91402661.2
(22) Date de dépôt: 04.10.1991
(51) Int. Cl.: F26B 23/00, F28F 1/10

(54) **Dispositif d'échange thermique gaz-gaz**
Gas-Gas-Wärmetauscher
Gas-gas heat exchanger

(30) Priorité: 17.10.1990 FR 9012818
(43) Date de publication de la demande: 22.04.1992
(73) Titulaire: Bergounhon, René, F-94130 Nogent-sur-Marne (FR)
(72) Inventeur: Bergounhon, René, F-94130 Nogent-sur-Marne (FR)

(56) Documents cités:
- DE-A- 2 018 533
- FR-A- 2 578 965
- US-A- 2 434 976
- US-A- 4 093 020
- US-A- 4 913 222

## Description

L'invention concerne un dispositif d'échange thermique de type air-air ou gaz-gaz selon le préambule de la revendication 1. Un tel dispositif est utilisé notamment pour les séchoirs de carreaux de plâtre.

Lorsque l'on désire transmettre la chaleur d'un gaz à un autre gaz que l'on doit réchauffer, au travers d'un échangeur, les surfaces d'échange de chaleur doivent être très importantes sur chacune des deux faces de l'échangeur.

On connaît les échangeurs du type tubes à ailettes, essentiellement constitués d'un tube à l'extérieur duquel sont fixées des ailettes. Ces dispositifs comportent une surface d'échange extérieure importante (ailettes), mais la surface interne est limitée à celle du tube proprement dit. Ce type d'échangeur convient à un échange thermique eau-air et d'une manière plus générale, liquide à l'intérieur du tube et gaz à l'extérieur, car la conductibilité des liquides étant très largement supérieure à celle des gaz, l'échange thermique est équitablement réalisé entre l'extérieur et l'intérieur, par la surface externe importante des ailettes et la surface interne réduite du tube.

L'invention a pour but de réaliser un dispositif d'échange thermique gaz-gaz amélioré à partir d'un tel tube à ailettes. Elle propose en effet un dispositif d'échange thermique de type air-air ou gaz-gaz, notamment pour des séchoirs, fonctionnant avec des tubes à ailettes par lesquelles un premier gaz est réchauffé, caractérisé en ce qu'il comporte au moins un conduit interne longitudinal fixé à l'intérieur du tube à ailettes et à sa partie inférieure, par lequel un second gaz est amené par l'une de ses extrémités débouchant à l'extérieur du tube, ce conduit comportant des ouvertures longitudinales formées sensiblement parallèlement à l'axe du tube et étant fermé à son autre extrémité à l'intérieur du tube, le tube étant rempli partiellement d'un liquide intermédiaire, par exemple de l'eau, jusqu'à un certain niveau délimité par des parois de débordement d'une hauteur déterminée, au moins une aspiration étant formée à une extrémité du tube, opposée à celle correspondant à l'amenée dudit second gaz.

Il résulte de cette disposition que ladite aspiration lorsque le tube est maintenu horizontal, crée un courant migratoire du gaz contenu à l'intérieur du conduit et qui le force à traverser le liquide par lesdites ouvertures, transmettre sa chaleur au liquide et à ressortir du tube du côté de l'aspiration.

Lesdites ouvertures du conduit peuvent être conformées de façon adéquate pour, tenant compte de la perte de charge en longueur, assurer une distribution homogène du gaz à l'intérieur du liquide. Les ouvertures peuvent par exemple consister en au moins une fente longitudinale formée parallèlement à l'axe du tube. Si la section du conduit est en U retourné verticalement sur le fond du tube, on peut par exemple avoir deux fentes opposées par rapport au plan médian du tube, formées sensiblement sur la longueur du conduit à l'endroit de la jonction du conduit et du tube.

L'homogénéité de la migration du gaz entre le conduit interne et le liquide contenu dans le tube peut être améliorée en disposant une couche de matériau poreux entre le conduit et le tube à l'endroit desdites fentes d'échappement du gaz. On évite ainsi en fractionnant l'échappement la formation de grosses bulles de gaz au sein du liquide dont le transfert thermique est plus faible.

On peut encore utiliser dans ce but d'accroître la diffusion plusieurs conduits identiques de longueur réduite montés en série et dont la sortie de l'un correspond à l'entrée du suivant, l'aspiration étant réalisée à la sortie du dernier conduit.

Naturellement à l'entrée du conduit ou du premier conduit, on peut amener le gaz sous pression.

On réalise ainsi un système de transfert thermique gaz-liquide intermédiaire-gaz qui est très compact.

L'invention est illustrée ci-après à l'aide d'exemples de réalisation et en référence aux dessins annexés sur lesquels :
La figure 1 est une vue en coupe longitudinale d'un dispositif de transfert thermique selon l'invention ;
La figure 2 est une coupe transversale de ce dispositif ;
La figure 3 montre le niveau du liquide en fonctionnement du dispositif ;
La figure 4 est une coupe transversale d'une variante de réalisation comportant un matériau poreux et
La figure 5 est une coupe longitudinale d'une autre variante de réalisation à plusieurs conduits.

L'appareil fonctionne pour le transfert thermique d'un gaz à un autre gaz en utilisant un liquide intermédiaire. Néanmoins, pour la simplification, les appellations de "air" pour les gaz et de "eau" pour les liquides seront utilisées dans la suite.

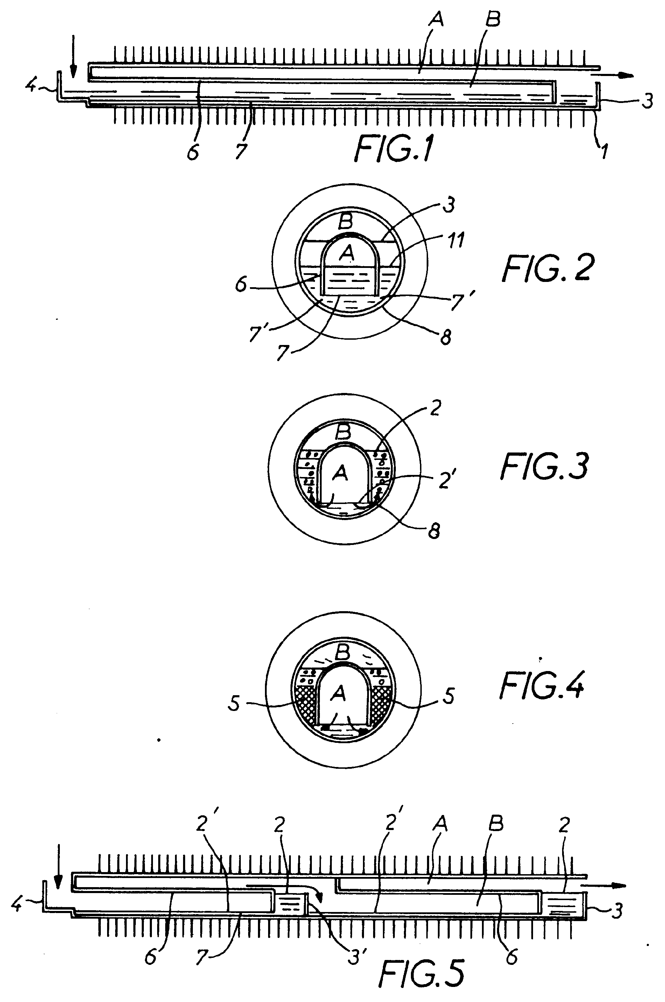

Comme représenté sur les figures 1 et 2, le dispositif selon l'invention est constitué d'un tube à ailettes externes 1 dans lequel est disposé un canal ou conduit interne (6) de section régulière en U inversé, ouvert à sa partie inférieure 7 délimitant deux fentes longitudinales 7', opposées par rapport au plan médian du tube, sensiblement à la partie inférieure de celui-ci et séparant l'intérieur du tube en deux chambres A et B. Une paroi 3 ferme partiellement la sortie du tube. Un embout 4 ferme partiellement le canal 6 et forme l'entrée du gaz dans le canal.

Comme représenté à la figure 2 (coupe transversale de la figure 1), le tube contient un liquide jusqu'au niveau 11 dans le récipient ainsi réalisé en position horizontale. Par pression de l'air côté entrée (flèche entrante) et/ou dépression coté sortie (flèche sortante), le niveau de l'eau s'établit en fonctionnement dans le tube en 2 et 2' et à l'extérieur du canal (Figure 3). L'air passe de la chambre A dans la chambre B en traversant le liquide par les fentes intérieures 7'. L'échange thermique est direct entre l'air et l'eau, laquelle pourra transmettre la grande quantité de chaleur récupérée à la paroi du tube (8) et donc aux ailettes externes grâce à son bon coefficient de conductibilité.

Le niveau 2' étant naturellement horizontal, on comprend que l'ensemble du tube doit être parfaitement horizontal et rectiligne pour ne pas créer sur la longueur du canal (6) des zones préférentielles de passage de l'air qui nuieraient au bon échange thermique entre l'air et l'eau, les bulles d'air traversant le liquide étant dans ce cas de tailles importantes et la surface de contact eau-air réduite de ce fait.

Pour pallier cet inconvénient et en réduire les effets, on peut utiliser la disposition de la figure 4 selon laquelle il est placé un élément poreux (5) dans le tube et à l'extérieur du canal, sensiblement sur sa hauteur, dont les fonctions seront d'établir une perte de charge qui évite la création de passages préférentiels et assure en même temps un fractionnement fin des bulles d'air. Le matériau poreux est par exemple une éponge métallique ou une laine de roche. La surface d'échange entre l'eau et l'air sera ainsi maximale. On peut également dans ce même but de diffusion élevée du gaz au sein du liquide (figure 5), fractionner la longueur du canal (6) en deux ou plusieurs tronçons montés en série, la sortie de l'un correspondant à l'entrée du suivant. Les niveaux 2 et 2' de la figure 5 sont représentés en fonctionnement sous l'action d'une pression d'air coté entrée ou d'une dépression coté sortie. Plusieurs passages de l'air au travers de l'eau seront ainsi réalisés assurant un échange thermique maximal.

L'évaporation éventuelle du liquide contenu dans le tube pourra être compensée par un apport extérieur. Dans le cas d'un air chaud chargé en eau, les condensats feront cet apport, la hauteur de la paroi 3 ou 3' réglant le niveau maximal du liquide par débordement naturel.

Plusieurs tubes ainsi décrits peuvent également être assemblés en parallèle selon ce même principe. La ventilation forcée des ailettes permettra des transferts importants de chaleur sur le gaz ou l'air passant sur les ailettes.

## Revendications

1. Dispositif d'échange thermique de type air-air ou gaz-gaz, notamment pour des séchoirs, fonctionnant avec des tubes à ailettes (1) par lesquelles un premier gaz est réchauffé, caractérisé en ce qu'il comporte au moins un conduit interne longitudinal (6) fixé à l'intérieur du tube à ailette et à sa partie inférieure, par lequel un second gaz est amené par l'une des ses extrémités débouchant à l'extérieur du tube, ce conduit (6) comportant des ouvertures longitudinales (7') formées sensiblement parallèlement à l'axe du tube et étant fermé à son autre extrémité à l'intérieur du tube, le tube étant rempli partiellement d'un liquide intermédiaire, par exemple de l'eau, jusqu'à un certain niveau délimité par des parois de débordement d'une hauteur déterminée (3), au moins une aspiration étant formée à une extrémité du tube, opposée à celle correspondant à l'amenée dudit second gaz.

2. Dispositif d'échange thermique selon la revendication 1, caractérisé en ce que lesdites ouvertures (7') du conduit sont conformées de façon adéquate pour, tenant compte de la perte de charge en longueur, assurer une distribution homogène du gaz à l'intérieur du liquide.

3. Dispositif d'échange thermique selon l'une des revendications 1 et 2, caractérisé en ce que les ouvertures (7') consistent en au moins une fente longitudinale formée parallèlement à l'axe du tube.

4. Dispositif selon l'une des revendications précédentes, caractérisé en ce que la section du conduit (6) est en forme de U renversé verticalement.

5. Dispositif selon la revendication 4, caractérisé en ce que les fentes (7') sont opposées par rapport au plan médian du tube, par exemple formées sensiblement sur la longueur du conduit à l'endroit de la jonction du conduit et du tube.

6. Dispositif selon l'une des revendications 3 à 5, caractérisé en ce qu'une couche de matériau poreux (5), par exemple une éponge métallique, est logée entre le conduit et le tube à l'endroit desdites fentes d'échappement du gaz.

7. Dispositif selon l'une des revendications précédentes, caractérisé en ce qu'il comprend plusieurs conduits identiques (6) de longueur réduite montés en série et dont la sortie de l'un correspond à l'entrée du suivant, l'aspiration étant réalisée à la sortie du dernier conduit.

8. Dispositif selon l'une des revendications précédentes caractérisé en ce que le second gaz à l'entrée du conduit (6) ou du premier conduit (6) est amené sous pression.

## Patentansprüche

1. Wärmeaustauschvorrichtung des Typs Luft-Luft oder Gas-Gas, unter anderem für Trockner, welche mit Radiatorrohren (1) funktioniert, über die ein erstes Gas erwärmt wird; die Wärmeaustauschvorrichtung ist gekennzeichnet durch die Tatsache, dass sie mindestens eine longitudinale interne Leitung aufweist (6), welche innen im Radiatorrohr befestigt ist, sowie an seinem Unterteil; ein zweites Gas wird über diese interne Leitung (6) zugeführt, und zwar durch eines ihrer Enden, welches aus dem Rohr mündet; diese Leitung (6) weist längliche Öffnungen (7') auf, welche in etwa parallel zur Rohrachse angeordnet sind, und ist an ihrem anderen Ende im Rohr geschlossen; das Rohr ist teilweise mit einer Zwischenflüssigkeit gefüllt, zum Beispiel Wasser, bis zu einem gewissen Pegel, welcher durch Überlaufwandungen einer bestimmten Höhe (3) begrenzt ist; es ist mindestens eine Ansaugung an einem Ende des Rohres ausgebildet, und zwar an dem, welches dem Zulauf des zweiten Gases entsprechenden Ende gegenüberliegt.

2. Wärmeaustauschvorrichtung, gemäss dem Patentanspruch 1, gekennzeichnet durch die Tatsache, dass die obengenannten Öffnungen (7') der Leitung in geeigneter Weise ausgebildet sind, um unter Berücksichtigung des Druckverlustes in Längsrichtung die gleichmässige Aufteilung des Gases in der Flüssigkeit zu gewährleisten.

3. Wärmeaustauschvorrichtung, gemäss den Patentansprüchen 1 oder 2, gekennzeichnet durch die Tatsache, dass die Öffnungen (7') aus mindestens einem länglichen Schlitz bestehen, welcher parallel zur Rohrachse ausgebildet ist.

4. Vorrichtung, gemäss einem der obengenannten Patentansprüche, gekennzeichnet durch die Tatsache, dass der Leitungsquerschnitt (6) ein vertikal umgekehrte U-Form aufweist.

5. Vorrichtung, gemäss dem Patentanspruch 4, gekennzeichnet durch die Tatsache, dass die Schlitze (7') der Mittelebene des Rohres gegenüberliegen, d.h. dass sie zum Beispiel in etwa auf der Längsseite der Leitung ausgebildet sind, und zwar an der Verbindungsstelle der Leitung und des Rohres.

6. Vorrichtung, gemäss einem der Patentansprüche 3 bis 5, gekennzeichnet durch die Tatsache, dass eine Schicht aus porösem Material (5), zum Beispiel ein Metallschwamm, zwischen der Leitung und dem Rohr angeordnet ist, an der Stelle der obengenannten Gasauslassschlitze.

7. Vorrichtung, gemäss einem der obengenannten Patentansprüche, gekennzeichnet durch die Tatsache, dass sie mehrere identische Leitungen (6) verringerter Länge umfasst, welche in Reihe montiert sind; der Ausgang einer Leitung entspricht dem Eingang der nächsten; die Ansaugung erfolgt am Ausgang der letzten Leitung.

8. Vorrichtung, gemäss einem der obengenannten Patentansprüche, gekennzeichnet durch die Tatsache, dass das zweite Gas am Eingang der Leitung (6) oder der ersten Leitung (6) unter Druck zugeführt wird.

## Claims

1. An air-air or gas-gas type heat exchange device especially suited for dryers and which uses finned tubes (1) for reheating a first gas, with the said exchanger device being characterised by having at least one internal longitudinal conduit (6) fixed inside the finned tube to its lower end. A second gas is fed into the said internal conduit (6) via one of its two ends which opens to the outside of the tube. The said conduit (6) has openings along its length (7') shaped to parallel the tube axis, and is closed at its other end within the tube. The tube (1) is partly filled with an intermediate liquid, for example water, up to a certain level limited by the overflow walls of fixed height (3). Suction occurs at one end of the tube, opposite the inlet of the said second gas.

2. Heat exchange device as per claim 1, and characterised by the said openings (7') of the conduit being so designed as to ensure the uniform distribution of gas within the liquid, given the loss of load along the length.

3. Heat exchange device as per either claim 1 or claim 2, and characterised by the openings (7') consisting of at least one long slit lying parallel to the tube's axis.

4. Device as per one of the preceding claims, and characterised by the cross-section of the conduit (6) being in the shape of a vertically inverted U.

5. Device as per claim 4, characterised by the slits (7') being diametrically opposed with respect to the tube median plane, for example formed along the length of the conduit at the point of contact between the conduit and the tube.

6. Device as per one of claims [*3 to 5*] and characterised by a layer of porous material (5), such as a metal sponge, for example, being seated between the conduit and the tube at the point of the said gas release slits.

7. Device as per one of the previous claims, and characterised by having several identical conduits (6) of reduced length and mounted in series, and whereby the outlet of one corresponds to the inlet of the next, with suction occurring at the outlet of the last conduit.

8. Device as per one of the previous claims, and characterised by the second gas at the inlet of conduit (6) or the first conduit (6) being propelled under pressure.
